# EUROPÄISCHE PATENTSCHRIFT

(11) **EP 3 217 591 B1**
(45) Veröffentlichungstag und Bekanntmachung des Hinweises auf die Patenterteilung: **28.08.2019**
(21) Anmeldenummer: 16159210.0
(22) Anmeldetag: 08.03.2016
(51) Int. Cl.: H04L 9/00, G06F 21/86, G09C 1/00, E05B 39/02, H01H 13/08, H01H 9/28

(54) **VORRICHTUNG ZUM SCHUTZ EINES GERÄTES VOR EINEM UNBERECHTIGTEN ZUGRIFF**
DEVICE FOR PROTECTING A DEVICE AGAINST UNAUTHORIZED ACCESS
DISPOSITIF DE PROTECTION D'UN APPAREIL CONTRE UN ACCES NON AUTORISÉ

(43) Veröffentlichungstag der Anmeldung: 13.09.2017
(73) Patentinhaber: Siemens Aktiengesellschaft, 80333 München (DE)
(72) Erfinder: Hertlein, Klaus, 90579 Langenzenn (DE); Hölle, Rainer, 90542 Eckental (DE); Füg, Fritz, 90556 Cadolzburg (DE); Sendner, Robert, 90765 Fürth (DE)

(56) Entgegenhaltungen:
- EP-A1- 2 332 801
- WO-A1-2008/061541
- DE-A1-102006 014 593
- GB-A- 2 237 322

## Beschreibung

Die Erfindung betrifft eine Vorrichtung zum Schutz eines elektrischen Gerätes, insbesondere eines Kryptografiegeräts vor einem unberechtigten Zugriff, wobei die Vorrichtung als Auslösevorrichtung zum Auslösen eines elektrischen Kontakts ausgebildet ist, die zur insbesondere dauerhaften Unbrauchbarmachung des Geräts vorgesehen ist. Die Erfindung betrifft weiter ein elektrisches Gerät mit einer derartigen Vorrichtung.

Eine derartige Vorrichtung, im Folgenden auch als Auslösevorrichtung bezeichnet, kommt zum Einsatz, um ein sogenanntes Kryptografiegerät vor unberechtigten Zugriff zu schützen. Dabei ist es Ziel einer derartigen Vorrichtung, ein elektrisches Gerät oder zumindest Teile davon durch Schließen eines elektrischen Kontaktes dauerhaft unbrauchbar zu machen. Damit ein Auslösen eines solchen meist über einen Taster aktivierbaren Kontakts nicht unbeabsichtigt erfolgt, werden dabei häufig zwei voneinander unabhängige Betätigungsvorgänge ausgeführt. So ist es z.B. üblich, zwei Taster zu verwenden, welche gleichzeitig betätigt werden müssen, um einen elektrischen Kontakt zu schließen, wobei die beiden Taster zusätzlich auch noch mit räumlichem Abstand voneinander angebracht sein können, um eine unbeabsichtigte Bedienung zu verhindern.

Aus der GB 2 237 322 A ist ein Sicherheitsbehälter mit einem Gehäuse bekannt mit einer abnehmbaren Abdeckung und Sicherungsmittel, die die Abdeckung in Position halten, wobei die Sicherungsmittel zumindest teilweise zerbrechlich sind, um das Entfernen der Abdeckung zu erleichtern.

Die EP 2 332 801 A1 betrifft eine Notbetätigungseinrichtung für ein Fahrzeug, insbesondere ein Schienenfahrzeug, zur Betätigung über mindestens zwei aufeinanderfolgende Betätigungshandlungen mit einem Betätigungselement für eine Steuereinrichtung und einer dem Betätigungselement zugeordneten Abschirmung, wobei die Steuereinrichtung eine Zugangseinrichtung, insbesondere eine Tür, zum Fahrzeug infolge einer Betätigung des Betätigungselements aus einer Ruheposition entriegelt, wobei die Abschirmung in einem geschlossenen Zustand das in seiner Ruheposition befindliche Betätigungselement gegen ungehinderten Zugriff abschirmt.

Aus der DE 10 2006 014593 A1 ist ein Deckel zum Verschluss eines Betätigungselements einer Antriebsvorrichtung, umfassend eine Deckfläche und ein mechanisches Siegel bekannt, wobei das Siegel derart an der Deckfläche angeordnet ist, dass es zu einer manuellen Betätigung des Betätigungselements erkennbar mechanisch verändert wird, wobei das Siegel als integraler Bestandteil des Deckels ausgebildet ist, derart, dass das Siegel und die Deckfläche zusammen aus Kunststoff gefertigt sind, wobei das Siegel über eine Anzahl von Sollbruchstellen mit der Deckfläche verbunden ist.

Der Erfindung liegt die Aufgabe zu Grunde, eine Vorrichtung zum Schutz eines elektrischen Gerätes anzugeben, die einen zuverlässigen und gleichzeitig aufwandsarmen Schutz des elektrischen Geräts ermöglicht und die weiter eine ausreichende Sicherheit vor einer unbeabsichtigten Bedienung bietet.

Diese Aufgabe wird durch eine Vorrichtung zum Schutz eines elektrischen Geräts mit den im Anspruch 1 angegebenen Merkmalen gelöst. Dbei weisen die Schutzmittel einen einzelnen Taster zum Schließen eines elektrischen Kontakts und eine Abdeckung zur Abdeckung des Tasters auf, wobei die Abdeckung dazu vorgesehen ist, eine Betätigung des Tasters in einem Normalbetriebszustand des Geräts zu verhindern und eine Betätigung des Tasters bei einer zumindest teilweisen Entfernung der Abdeckung zu ermöglichen.

Der Erfindung liegt die Erkenntnis zu Grunde, dass der Aufwand der Vorrichtung deutlich verringert werden kann, wenn anstelle von zwei Tastern lediglich nur noch ein Taster verwendet wird. Um eine fehlerhafte Betätigung des Tasters zu verhindern, wird dieser bevorzugt in einer Vertiefung z.B. in der Gerätefront untergebracht. Zusätzlich ist der Taster durch eine geeignete Abdeckung aus Kunststoff oder Metall abgedeckt, welche verhindert, dass der Taster unabsichtlich betätigt werden kann.

Vorteilhafte Ausgestaltungsformen sind in den Unteransprüchen enthalten.

Erfindungsgemäßist der Taster durch eine geeignete Abdeckung, insbesondere aus Kunststoff oder aus Metall abgedeckt, welche zur Verhinderung einer unabsichtlichen Betätigung des Tasters vorgesehen ist.

Bei einer weiteren Ausgestaltungsform ist die Abdeckung aus Kunststoff oder einem sonstigen durchsichtigem Material ausgeführt, damit der darunterliegende Taster erkennbar ist.

Ein definierter Zugriff auf den Taster kann dadurch sichergestellt werden, dass der Taster in einer Vertiefung, insbesondere in der Gerätefront angeordnet ist.

Eine ergonomische und sichere Auslösung sowohl was ein versehentliches Auslösen als auch was ein beabsichtigtes Auslösen des Tasters anbelangt kann dadurch sichergestellt werden, dass die Vertiefung derart ausgeformt ist, dass der Finger eines Benutzers unter die Abdeckung zum Anheben der Abdeckung einführbar ist.

Für eine optische Hervorhebung der Tasterfunktion weist die Abdeckung einen Warnaufdruck zur Warnung eines Benutzers des Geräts vor einer unbeabsichtigten Entfernung der Abdeckung und/oder vor einer unbeabsichtigten Betätigung des Tasters auf.

Eine konkrete technische Realisierung kann dadurch erzielt werden, dass der Taster derart ausgeführt ist, dass die Betätigungsfläche nicht höher ist als der feststehende Rand des Tasters, so dass der Taster nicht versehentlich betätigbar ist, wenn Druck auf die Abdeckung ausgeübt wird.

Erfindungsgemäß sind Taster und Abdeckung derart ausgeführt, dass erst nach einem Hochbiegen der Abdeckung der darunterliegende Taster freigelegt wird und dadurch derart zugänglich ist, dass er nach Freilegung erst betätigbar ist.

Eine dauerhafte optische Kenntlichmachung eines erfolgten Auslösens des Tasters wird dadurch erzielt, dass die Abdeckung derart ausgestaltet ist, dass sich die Abdeckung derart verformt, dass die Verformung der Abdeckung nicht rückgängig machbar ist oder dass die Abdeckung an einer Sollbruchstelle abbricht oder dass das Hochbiegen der Abdeckung auch im Nachhinein deutlich erkennbar ist.

Erfindungsgemäß und konstruktiv vorteilhaft ist es für die Betriebssicherheit des Geräts, dass die Abdeckung derart befestigt ist, dass sie nicht von außen austauschbar ist. Hierzu ist die Abdeckung von außen nicht lösbar mittels Befestigungselementen mit der Front derart verbunden, dass ein Austausch der Abdeckung erst nach einem Öffnen des Gehäuses möglich ist.

Ein unbeabsichtigtes Betätigen des Tasters wird dadurch vermieden, dass zwischen Abdeckung und Taster ein derartiger Abstand besteht, dass ein unbeabsichtigtes Betätigen des Tasters beim Drücken auf die Abdeckung unmöglich ist.

Vorteilhafterweise ist die Abdeckung derart ausgebildet, dass sie nicht ohne Zerstörung entfernt werden kann. Hierzu kann die Abdeckung eine Sollbruchstelle aufweisen.

Um sicherzustellen, dass nur autorisierte Personen Zugriff auf das Gerät und seine Daten erhalten, sind die Aufnahme der Abdeckung und die Abdeckung derart ausgebildet, dass ein Austausch nur nach dem Öffnen des Gehäuses möglich ist.

Hierzu weist das Gehäuse mindestens ein Gerätesiegel auf, das zur Sicherstellung eines Öffnens des Gehäuses nur durch berechtigte Personen vorgesehen ist.

Im Folgenden wird die Erfindung anhand der in den Figuren dargestellten Ausführungsbeispiele näher beschrieben und erläutert.

Es zeigen:
- FIG 1: eine schematische Darstellung eines elektrischen Geräts mit einer Vorrichtung zum Schutz des Gerätes vor einem unberechtigten Zugriff,
- FIG 2: eine schematische Darstellung einer Auslösevorrichtung in räumlicher Darstellung und
- FIG 3: einen seitlichen Schnitt der in FIG 2 dargestellten Auslösevorrichtung.

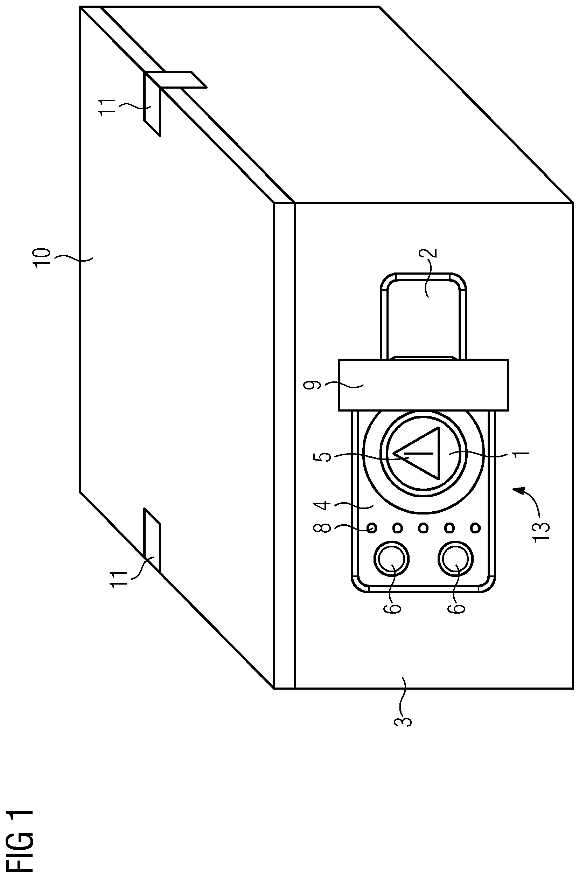

FIG 1 zeigt eine schematische Darstellung eines elektrischen Geräts 10 mit einer Vorrichtung 13 zum Schutz des Geräts 10 vor einen unberechtigten Zugriff. Das Gerät 10 ist im Wesentlichen kastenförmig ausgebildet, wobei an der Gerätefront 3 eine Auslösevorrichtung 13 angeordnet ist. Diese Auslösevorrichtung 13 wirkt als Vorrichtung zum Schutz des Geräts 10 vor einem unberechtigten Zugriff. Die Auslösevorrichtung 13 besteht im Wesentlichen aus einem Taster 1, der an der Gerätefront 3 hinter einer Abdeckung 4 verdeckt und versenkt angeordnet ist. Die Abdeckung 4 ist im Bereich des Tasters 1 mit einem Warnaufdruck 5 versehen. Die gesamte Auslösevorrichtung, d.h. im Wesentlichen die Abdeckung 4 ist mittels zweier Befestigungselemente 6,7 an der Gehäusefront 3 befestigt, wobei die Befestigungselemente von der Außenseite des Gehäuses nicht geöffnet werden können. Neben der Abdeckung 4 ist in der Gehäusefront 3 weiter eine Vertiefung 2 angeordnet. Die Abdeckung 4 weist eine Sollbruchstelle 8 auf, die im Bereich der Abdeckung 4 angeordnet ist. An der Gehäusefront ist im Bereich der Abdeckung 4 sowie im Bereich des Tasters 1 bzw. des Warnaufdrucks 5 ein Abdeckungssiegel angeordnet. Weiterhin befinden sich am Gehäuse 10 auch an den Seitenteilen weitere Gerätesiegel 11.

Der Taster 1 wird durch eine geeignete Abdeckung 4 aus Kunststoff oder Metall abgedeckt, welche verhindert, dass der Taster 1 unabsichtlich betätigt werden kann. Die Abdeckung 4 kann auch aus Kunststoff oder einem sonstigen durchsichtigem Material ausgeführt werden, damit der darunterliegende Taster 1 erkennbar ist. Die Vertiefung 2 ist so ausgeformt, dass ein Benutzer mit einem Finger unter die Abdeckung 4 fahren kann, um diese anzuheben. Die Abdeckung 4 kann mit einem Warnaufdruck 5 versehen werden. Der Taster 1 ist so ausgeführt, dass die Betätigungsfläche nicht höher ist als der feststehende Rand des Tasters 1, dadurch kann der Taster nicht versehentlich betätigt werden, wenn Druck auf die Abdeckung 4 ausgeübt wird. Um den Kontakt schließen zu können muss zuvor die Abdeckung 4 hoch gebogen werden, damit der darunterliegende Taster 1 freigelegt wird und betätigt werden kann. Durch den Biegevorgang wird die Abdeckung 4 so verformt, dass die Abdeckung 4 entweder an der Sollbruchstelle 8 abbricht oder die Verformung der Abdeckung 4 nicht rückgängig gemacht werden kann und somit das Hochbiegen der Abdeckung 4 auch im Nachhinein deutlich erkennbar ist. Die Abdeckung 4 kann nicht von außen ausgetauscht werden. Die Abdeckung 4 wird von außen nicht lösbar über die Befestigungselemente 6,7 mit der Front verbunden. Um die Abdeckung 4 auszutauschen, muss das Gehäuse geöffnet werden. Das Gerät 10 darf nur von Berechtigten Personen geöffnet werden und ist entsprechend durch Siegel 11 oder andere Vorrichtungen geschützt. Zusätzlich kann die Abdeckung 4 selbst noch durch das Siegel 9 geschützt werden.

Die Vorteile der in den Figuren gezeigten Ausführungsform liegen insbesondere darin:
- Es wird nur noch ein Taster 1 benötigt.
- Betätigung bzw. Auslösen ist deutlich erkennbar durch die beschädigte Abdeckung 4 und Bruch des Siegels 9.
- Eine Betätigung/Auslösung ist von außen erkennbar.
- Der Ursprungszustand des Auslöse-Mechanismus kann nicht vom Benutzer wiederhergestellt werden.
- Deutlicher verbesserter Schutz gegen versehentliches Auslösen und "Spielen" an dem Taster.
- Der Verdrahtungsaufwand innerhalb des Gerätes 10 ist deutlich geringer.

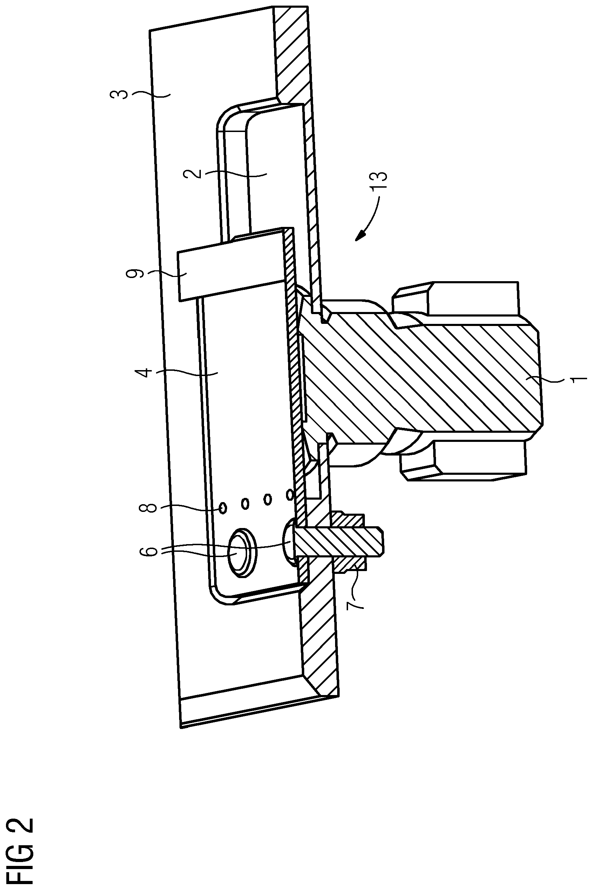

FIG 2 zeigt eine schematische Darstellung einer Auslösevorrichtung 13 in räumlicher Darstellung. Dabei werden die bereits im Zusammenhang mit Fig. 1 eingeführten Bezugszeichen verwendet. Wie bereits im Zusammenhang mit FIG 1 ausgeführt, besteht die Auslösevorrichtung im Wesentlichen aus dem Taster 1, der hinter einer Abdeckung 4 in der Gerätefront 3 angeordnet ist. In der räumlichen Darstellung wird nochmals deutlicher, dass es für einen möglichen Auslösevorgang erforderlich ist, mit einem Finger in die Vertiefung einzugreifen und von dort aus die Abdeckung hochzuziehen und im Bereich der Sollbruchstelle abzuknicken. Hierbei wird auch das Abdeckungssiegel 9 gebrochen, so dass eine eindeutige, d.h. nach außen sichtbare Nutzung der Auslösevorrichtung erkennbar ist. Erst nach einer derartigen Zugänglichmachung des Tasters 1 kann dieser auch betätigt werden.

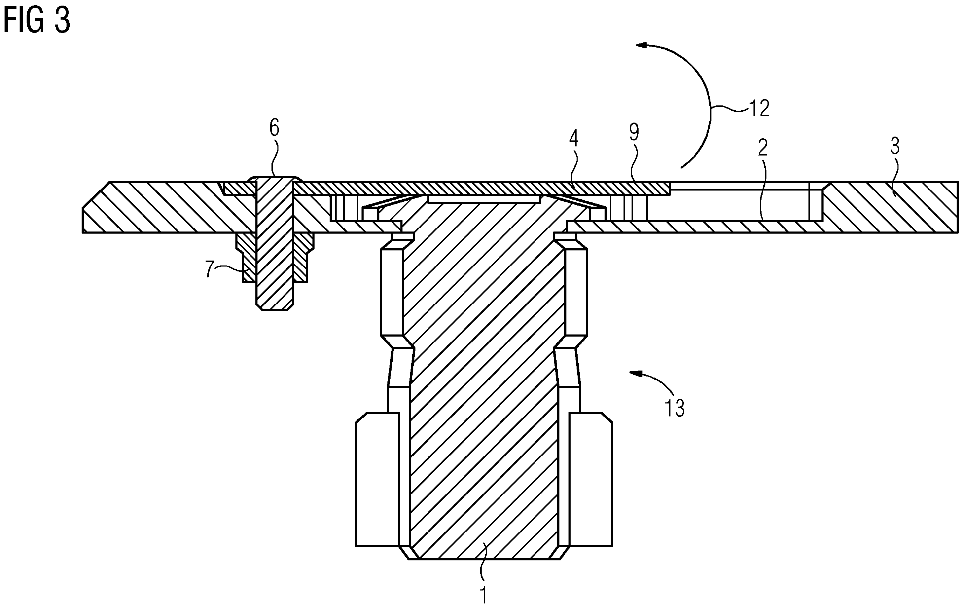

FIG 3 zeigt einen seitlichen Schnitt der in FIG 2 dargestellten Auslösevorrichtung. Die Auslösevorrichtung besteht, wie bereits im Zusammenhang mit den FIG 1 und 2 erläutert wurde, im Wesentlichen aus dem Taster 1, der hinter der Abdeckung 4 angeordnet ist. Die Abdeckung 4 ist mittels der Befestigungselemente 6,7 derart mit der Gehäusefront 3 verschraubt, dass ein Entfernen der Abdeckung von außerhalb des Gehäuses nicht möglich ist. Mittels eines Pfeils 12 ist in FIG 3 nochmals dargestellt, in welcher Bewegungsrichtung die Abdeckung 4 im Betätigungsfall nach oben gebogen werden kann.

Zusammenfassend betrifft die Erfindung somit eine Vorrichtung zum Schutz eines Gerätes vor einem unberechtigten Zugriff, wobei die Vorrichtung Schutzmittel aufweist, die zur insbesondere dauerhaften Unbrauchbarmachung des Geräts vorgesehen sind. Um einen zuverlässigen und gleichzeitig aufwandsarmen Schutz des Geräts zu ermöglichen, wird vorgeschlagen, dass die Schutzmittel einen einzelnen Taster 1 zum Schließen eines elektrischen Kontakts und eine Abdeckung 4 zur Abdeckung des Tasters 1 aufweisen, wobei die Abdeckung 4 dazu vorgesehen ist, eine Betätigung des Tasters 1 in einem Normalbetriebszustand des Geräts zu verhindern und eine Betätigung des Tasters 1 bei einer zumindest teilweisen Entfernung der Abdeckung 4 zu ermöglichen.

## Patentansprüche

1. Vorrichtung (13) zum Schutz eines als Kryptografiegerät ausgebildeten elektrischen Geräts (10) vor einem unberechtigten Zugriff,
• wobei die Vorrichtung (13) als Auslösevorrichtung (13) ausgebildet ist, die zur dauerhaften Unbrauchbarmachung des elektrischen Geräts (10) vorgesehen ist,
• wobei die Auslösevorrichtung (13) einen einzelnen Taster (1) zum Schließen eines elektrischen Kontakts und eine Abdeckung (4) zur Abdeckung des Tasters (1) aufweist,
• wobei der Taster (1) durch die Abdeckung (4) abgedeckt ist und wobei die Abdeckung (4) zur Verhinderung einer unabsichtlichen Betätigung des Tasters (1) vorgesehen ist,
• wobei die Abdeckung (4) von außen nicht lösbar mittels Befestigungselementen (6, 7) mit dem Gehäuse, insbesondere mit einer Gehäusefront (3) des elektrischen Geräts (10) derart verbunden ist, dass ein Austausch der Abdeckung (4) erst nach einem Öffnen des Gehäuses des elektrischen Geräts (10) möglich ist,
• wobei die Abdeckung (4) dazu vorgesehen ist, eine Betätigung des Tasters (1) in einem Normalbetriebszustand des elektrischen Geräts (10) zu verhindern und eine Betätigung des Tasters (1) erst bei einer zumindest teilweisen Entfernung der Abdeckung (4) zu ermöglichen,
• wobei zwischen Abdeckung (4) und Taster (1) ein derartiger Abstand besteht, dass ein unbeabsichtigtes Betätigen des Tasters beim Drücken auf die Abdeckung (4) unmöglich ist,
• wobei erst nach einem Hochbiegen der Abdeckung (4) der darunterliegende Taster (1) freigelegt wird und dadurch derart zugänglich ist, dass er erst nach Freilegung betätigbar ist,
• wobei der Taster (1) in einer Vertiefung (2) des Gehäuses des elektrischen Geräts (10), insbesondere in dessen Gerätefront (3) angeordnet ist,
• wobei der Taster (1) derart ausgeführt ist, dass seine Betätigungsfläche nicht höher ist als der feststehende Rand des Tasters (1), so dass der Taster (1) nicht versehentlich betätigbar ist, wenn Druck auf die Abdeckung (4) ausgeübt wird,
• wobei es für einen möglichen Auslösevorgang erforderlich ist, mit einem Finger in die Vertiefung (2) einzugreifen und von dort aus die Abdeckung (4) hochzuziehen und im Bereich einer Sollbruchstelle abzuknicken, wobei hierbei auch ein Abdeckungssiegel (9) gebrochen wird, so dass eine eindeutige, nach außen sichtbare Nutzung der Auslösevorrichtung (13) erkennbar ist und wobei erst nach einer derartigen Zugänglichmachung des Tasters (1) dieser auch betätigbar ist.

2. Vorrichtung nach Anspruch 1,
wobei die Abdeckung (4) aus Kunststoff oder einem sonstigen durchsichtigem Material ausgeführt ist, damit der darunterliegende Taster (1) erkennbar ist.

3. Vorrichtung nach einem der Ansprüche 1 oder 2,
wobei die Vertiefung (2) derart ausgeformt ist, dass ein Finger eines Benutzers unter die Abdeckung (4) zum Anheben der Abdeckung (4) einführbar ist.

4. Vorrichtung nach einem der vorhergehenden Ansprüche,
wobei die Abdeckung einen Warnaufdruck (5) zur Warnung eines Benutzers des Geräts (10) vor einer unbeabsichtigten Entfernung der Abdeckung (4) und/oder vor einer unbeabsichtigten Betätigung des Tasters (1) aufweist.

5. Vorrichtung nach einem der vorhergehenden Ansprüche,
wobei die Abdeckung (4) derart ausgestaltet ist, dass sich die Abdeckung (4) derart verformt, dass die Verformung der Abdeckung (4) nicht rückgängig machbar ist oder dass die Abdeckung an einer Sollbruchstelle (8) abbricht oder dass ein Hochbiegen der Abdeckung (4) auch im Nachhinein deutlich erkennbar ist.

6. Vorrichtung nach einem der vorhergehenden Ansprüche,
wobei die Abdeckung (4) derart befestigt ist, dass die nicht von außen austauschbar ist.

7. Vorrichtung nach einem der vorhergehenden Ansprüche,
wobei die Abdeckung (4) derart ausgebildet ist, dass sie nicht ohne Zerstörung entfernt werden kann.

8. Vorrichtung nach einem der vorhergehenden Ansprüche,
wobei die Abdeckung (4) eine Sollbruchstelle (8) aufweist.

9. Vorrichtung nach einem der vorhergehenden Ansprüche,
wobei die Aufnahme der Abdeckung und die Abdeckung (4) derart ausgebildet sind, dass ein Austausch nur nach dem Öffnen des Gehäuses möglich ist.

10. Vorrichtung nach einem der vorhergehenden Ansprüche,
wobei das Gehäuse (10) mindestens ein Gerätesigel (11) aufweist, das zur Sicherstellung eines Öffnens des Gehäuses (10) nur durch berechtigte Personen vorgesehen ist.

11. Elektrisches und/oder elektronisches Gerät (10), das als kryptographisches Gerät ausgebildet ist mit einer Vorrichtung (13) nach einem der vorhergehenden Ansprüche.

## Claims

1. Apparatus (13) for protecting an electrical device (10) embodied as a cryptographic device against unauthorised access,
• wherein the apparatus (13) is embodied as a releasing apparatus (13), which is provided for making the electrical device (10) permanently unusable,
• wherein the releasing apparatus (13) has an individual button (1) for closing an electrical contact and a covering (4) for covering the button (1),
• wherein the button (1) is covered by the covering (4) and wherein the covering (4) is provided for preventing an unintentional activation of the button (1),
• wherein the covering (4) is connected to the housing, in particular to a housing front (3) of the electrical device (10), such that it cannot be released from the outside by means of the fastening elements (6, 7) and such that it is only possible to replace the covering (4) after opening the housing of the electrical device (10),
• wherein the covering (4) is provided to prevent an activation of the button (1) in a normal operating mode of the electrical device (10) and only to enable an activation of the button (1) when the covering (4) is at least partially removed,
• wherein a spacing exists between covering (4) and button (1) such that an unintentional activation of the button when pressing on the covering (4) is impossible,
• wherein the underlying button (1) is only exposed once the covering (4) has been bent upwards, and is therefore accessible such that it can only be activated after being exposed,
• wherein the button (1) is arranged in a depression (2) of the housing of the electrical device (10), in particular in the device front (3) thereof,
• wherein the button (1) is designed such that its activation area is not higher than the stationary edge of the button (1), so that the button (1) cannot be activated by accident if pressure is exerted upon the covering (4),
• wherein, for a possible releasing procedure, it is necessary to engage into the depression (2) with a finger and, from there, to bend the covering (4) upwards and break it off in the region of a predetermined breaking point, wherein in this context a covering seal (9) is also broken, so that it can be seen that the releasing apparatus (13) has unambiguously been used in a manner which is visible from the outside, and wherein only after making the button (1) accessible in this manner can it also be activated.

2. Apparatus according to claim 1,
wherein the covering (4) is designed as made of a plastic or another transparent material, so that the underlying button (1) can be seen.

3. Apparatus according to one of claims 1 or 2,
wherein the depression (2) is shaped such that a finger of a user can be introduced under the covering (4) to lift the covering (4).

4. Apparatus according to one of the preceding claims,
wherein the covering has a warning label (5) for warning a user of the device (10) against unintentionally removing the covering (4) and/or against unintentionally activating the button (1).

5. Apparatus according to one of the preceding claims,
wherein the covering (4) is configured such that the covering (4) deforms such that the deformation of the covering (4) cannot be undone or that the covering breaks off at a predetermined breaking point (8) or that bending the covering (4) upwards is also clearly visible retrospectively.

6. Apparatus according to one of the preceding claims,
wherein the covering (4) is fastened such that it cannot be replaced from the outside.

7. Apparatus according to one of the preceding claims,
wherein the covering (4) is embodied such that it cannot be removed without destroying it.

8. Apparatus according to one of the preceding claims,
wherein the covering (4) has a predetermined breaking point (8) .

9. Apparatus according to one of the preceding claims,
wherein the receptacle of the covering and the covering (4) are embodied such that a replacement is only possible after opening the housing.

10. Apparatus according to one of the preceding claims,
wherein the housing (10) has at least one device seal (11), which is provided for ensuring that an opening of the housing (10) only takes place by authorised persons.

11. Electrical and/or electronic device (10), which is embodied as a cryptographic device with an apparatus (13) according to one of the preceding claims.

## Revendications

1. Dispositif (13) pour protéger un appareil (10) électrique constituant un appareil de cryptographie d'un accès non-autorisé,
• dans lequel le dispositif (13) est constitué sous la forme d'un dispositif (13) de déclenchement prévu pour rendre inutilisable, de manière durable, l'appareil (10) électrique,
• dans lequel le dispositif (13) de déclenchement a une touche (1) individuelle de fermeture d'un contact électrique et un recouvrement (4) pour recouvrir la touche (1),
• dans lequel la touche (1) est recouverte du recouvrement (4) et dans lequel le recouvrement (4) est prévu pour empêcher un actionnement non-intentionnel de la touche (1),
• dans lequel le recouvrement (4) est relié, d'une manière indissoluble de l'extérieur, au moyen d'éléments (6, 7) de fixation, au boîtier, notamment dans la face (3) antérieure du boîtier de l'appareil (10) électrique, de manière à ce qu'un remplacement du recouvrement (4) soit possible, seulement après une ouverture du boîtier de l'appareil (10) électrique,
• dans lequel le recouvrement (4) est prévu pour empêcher un actionnement de la touche (1) dans un état de fonctionnement normal de l'appareil (10) électrique et pour rendre possible un actionnement de la touche (1), seulement lors d'un retrait, au moins en partie, du recouvrement (4),
• dans lequel il y a, entre le recouvrement (4) et la touche (1), une distance telle qu'un actionnement involontaire de la touche, en appuyant sur le recouvrement (4), est impossible,
• dans lequel, seulement après un redressement du recouvrement (4), la touche (1) sous-jacente est mise à découvert et ainsi accessible de manière à pouvoir être actionnée après la mise à découvert,
• dans lequel la touche (1) est disposée dans une cavité (2) du boîtier de l'appareil (10) électrique, notamment dans la face (3) antérieure de l'appareil,
• dans lequel la touche (1) est réalisée de manière à ce que sa surface d'actionnement ne soit pas plus haute que le bord fixe de la touche (1), de manière à ne pas pouvoir actionner par mégarde la touche (1), si de la pression est appliquée au recouvrement (4),
• dans lequel il est nécessaire, pour une opération de déclenchement éventuelle, de pénétrer d'un doigt dans la cavité (2) et, de là, de tirer vers le haut le recouvrement (4) et de le couder dans la partie d'un point destiné à se rompre, un sceau (9) du recouvrement étant ainsi rompu, de manière à ce qu'une utilisation univoque, visible de l'extérieur du dispositif (13) de déclenchement, puisse être détectée et dans laquelle, seulement après que l'on a rendu accessible de cette façon la touche (1), celle-ci peut être actionnée également.

2. Dispositif suivant la revendication 1,
dans lequel le recouvrement (4) est en matière plastique ou en un autre matériau transparent, afin que la touche (1) sous-jacente puisse être perceptible.

3. Dispositif suivant l'une des revendications 1 ou 2,
dans lequel la cavité (2) est conformée de manière à ce qu'un doigt d'un utilisateur puisse être introduit sous le recouvrement (4) pour soulever le recouvrement (4).

4. Dispositif suivant l'une des revendications précédentes,
dans lequel le recouvrement a une impression (5) d'avertissement pour avertir un utilisateur de l'appareil (10) d'un retrait non-intentionnel du recouvrement (4) et/ou d'un actionnement non-intentionnel de la touche (1).

5. Dispositif suivant l'une des revendications précédentes, dans lequel le recouvrement (4) est conformé de manière à ce que le recouvrement (4) se déforme, de manière à ce que la déformation du recouvrement (4) puisse être rendue irréversible, de manière à ce que le recouvrement se rompe en un point (8) destiné à se rompre, de manière à ce qu'un redressement du recouvrement (4) puisse être perceptible nettement ensuite.

6. Dispositif suivant l'une des revendications précédentes, dans lequel le recouvrement (4) est fixé de manière à ne pas pouvoir être remplacé de l'extérieur.

7. Dispositif suivant l'une des revendications précédentes, **caractérisé en ce que** le recouvrement (4) est constitué de manière à ne pas pouvoir être retiré sans destruction.

8. Dispositif suivant l'une des revendications précédentes, dans lequel le recouvrement (4) a un point (8) destiné à se rompre.

9. Dispositif suivant l'une des revendications précédentes, dans lequel le logement du recouvrement et le recouvrement (4) sont constitués de manière à ce qu'un remplacement n'est possible qu'après l'ouverture du boîtier.

10. Dispositif suivant l'une des revendications précédentes, dans lequel le boîtier a au moins un sceau d'appareil prévu pour assurer une ouverture du boîtier (10) seulement par des personnes autorisées.

11. Appareil (10) électrique et/ou électronique, constitué en appareil cryptographique et ayant un dispositif (13) suivant l'une des revendications précédentes.
